# EUROPEAN PATENT APPLICATION

(11) **EP 3 078 450 A2**
(43) Date of publication of application: **12.10.2016**
(21) Application number: 16000786.0
(22) Date of filing: 06.04.2016
(51) Int. Cl.: B23Q 5/04, B23B 1/00, B23B 35/00

(54) **TOOL-HOLDER HEAD**

(30) Priority: 07.04.2015 ES 201530385 U
(71) Applicant: Madaula Latorre, Jose, 08105 Barcelona (ES)
(72) Inventor: Madaula Latorre, Jose, 08105 Barcelona (ES)
(74) Representative: Diaz Nunez, Joaquin

(57) **Abstract**

Tool-holder head with hollow main body (2) with taper (3) attached to the machine, by means of an external fixing element (4) and transmission mechanism (5) with rotary motion by its axial axis, of the support (6) where a tool is attached, where the axial axis (6a) of the support (6) is located at an angle (a) from 90 ° to -90 °, about the vertical axis (3a) of the attachment taper (3) to machine, and, coupled to the support (6), a vibrating device (7) with bearing (71) whose bearings (72) roll on undulating surface, determining the axial oscillation of the rotary support unit (6) is preferably a spindle. Optionally, the rotary support unit (6) is incorporated in mobile accessory of the main body (2) with articulation to vary its angle (a) with the vertical axis (3a). It can also have two axial axis (6a), with both spindles for the respective tools.

## Description

### OBJECT OF THE INVENTION

The invention, as stated on the statement of this descriptive memory, refers to a tool-holder angle head, which provides some innovative structural and constitutive features, which will be described in detail below, representing a novelty within its field of application.

More particularly the object of the invention focuses on a tool-holder head for machines for drilling, milling, turning applications which, being preferably of interchangeable type, is distinguished by the fact that combines a configuration with angular positioning of the tool on the attachment to the machine with a vibrating device.

### TECHNICAL FIELD OF THE INVENTION

The scope of the present invention is the industrial sector devoted to the manufacture of machinery and devices for machining, milling and / or drilling or turning, particularly metallic surfaces.

### BACKGROUND OF THE INVENTION

As reference to the current state of the technique, it should be pointed out that, although different types and models of interchangeable heads for machines for industrial machining of the type here referred are already known on the market and some of them have an angular configuration in which the machining tool has its axis of axial rotation arranged at an angle to the point of attachment of the head to the machine, it is unknown (at least by the applicant) the existence of any head that simultaneously combines the angular configuration with a vibratory device as herein described and claimed.

### EXPLANATION OF THE INVENTION

Specifically proposed by the invention, as noted above, is a tool-holder head for machining tools, milling or drilling which preferably consists of a piece of interchangeable type and it is distinguished by an angular configuration; that is, an angular disposition of the tool, usually a drill inserted into a rotating spindle, for attachment to the machine, combined with a vibrating device, so that the tool, besides the turning movement, has a movement of axial vibration.

To that end, and more specifically, the head proposed by the invention is made from a hollow main body with a coupling taper or adapter to the machine for its attachment in the vertical plane to the particular machine in each case, and which will drive the tool. This coupling is preferably fixed by means of an external element to the mentioned main body. Inside there is a transmission mechanism, usually geared, which determines the rotary movement (by its axial axis) of the support unit of the tool or tools, which preferably consists of a spindle which moves within the main body moved by the mentioned mechanism, with the particularity that the axis of this support is located angular to the vertical axis of the coupling taper.

Moreover, in parallel, the head also includes (attached to the axial axis of the tool holder above) a vibrating device comprising a first bearing with bearings which roll on a wavy surface with an axial component so that, periodically, establish the axial oscillation of the support unit, so that the rotation thereof is coordinated with a vibration movement.

It is important to point out that the arrangement of the axis of the rotary support unit can have different angles with relation to the attachment vertical axis, so that it can be arranged in any axis other than the axis of the machine, making no matter what angle to the same, while normally it will be between 90° to -90° and it may also consist of a movable piece that allows changing the angle as convenient.

On the other hand the rotary support unit can also incorporate one or two tools, so that the vibrating device is mounted on the tool-holder axis, no matter if the angle head has got one or more.

Also the head may also have a high pressure coolant passage through the spindle.

The vibrating mechanism may have a variable number of undulations, which will determine the number of oscillations of the toot.

The main advantage of this device lies on the fact that the force made by the drill in the axial movement is periodically interrupted with the result, for example, that the material chips are broken and do not mean an increasing and continuous element that may disturb the machining. In the same way, in case of axial overload of the tool, it remains submitted to the vibration motion.

Another advantage in addition is the angular disposition of the tool in the head, which makes it fit all types of machine tools, and also allows the access to places of difficult machining; it saves time by avoiding different workpiece clampings and also it allows setting an additional axis to the machine tool.

### DESCRIPTION OF THE DRAWINGS

As a complement to the description and for a better understanding of the features of the invention, a set of drawings is attached to the present specification, as a part thereof. They show in a illustrative and not limiting way as follows:
Figure N° 1.- shows a schematic side and partially sectioned view as an example of a tool-holder subject of the invention. We can see the main elements and parts, as well as the configuration and arrangement.
And Figure 2 shows a detail A magnified view indicated in Figure 1, schematically showing the configuration of the vibrating device of the head

### PREFERRED EMBODIMENT OF THE INVENTION

In view of the described figures, and in accordance with the numbering therein, we can see how the head (1) is made from a main hollow body (2) with a coupling taper (3) for its attachment in the vertical plane onto machine, attached to it by means of an external fixing element (4), existing inside of the mentioned main body (2) a transmission mechanism (5), which determines the rotary movement by its axial axis of the support unit (6) in which at least one tool engages, which preferably consists of a spindle whose axial axis (6a) is placed angularly (a) with relation to the vertical axis (3a) of the mentioned taper (3) and with the particularity that, in addition to be attached to the mentioned support unit, it has a vibrating device (7) comprising a gear (71) with bearings (72) which roll on at least one wavy surface (73), so that in each rotation of the support unit (6), they define the axial oscillation thereof.

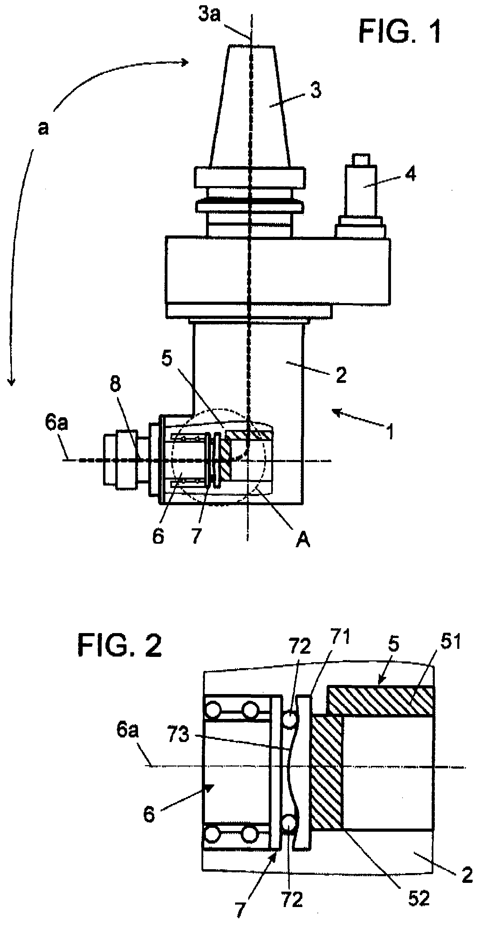

As seen in the detail of figure 2, the vibrating device (7) is attached to the transmission mechanism (5), formed preferably by helical bevel gears (51. 52), coupled angularly. The bearing (71 ) is joined to the gear (52) of the axial axis (6a) of the spindle of the rotary support unit (6) on which the tool is assembled, so that it rotates with the rotation thereof around the mentioned axial axis (6a) and, with its turn, determines the axial oscillation or displacement of the mentioned unit.

Note that the axial axis (6a) of the rotary support unit (6) can have any angle (a) with relation to the vertical axis (3a), although it will be preferably from 90° to -90".

In addition the rotary support unit (6) is optionally built-in into a mobile accessory of the main body (2), allowing to vary the mentioned angle (a) as convenient.

Also optionally the rotary support unit (6) has two axial axis (6a) with respective spindles for the incorporation of the tools, each of them connected to the vibratory device (7).

Finally, the head (1) may also have a duct (8), shown in Figure 1 by dashed lines, for the passage of high pressure coolant through the spindle of the rotary support unit (6). In any case, the wavy surface (73) of the gear (71) of the vibrating device (7) has a variable number of undulations, which determine the number of oscillations of the tool on every rotation.

Enough described the nature of the present invention, as well as how to implement it, it is not considered necessary to extend its explanation. Any expert in the subject will understand its scope and advantages. It must be pointed out that, taking into account its essence, it may be put into practice in other embodiments different in detail from the above as an example, and which are also covered by the protection, provided that it does not alter, change or modify its fundamental principle.

## Claims

1. Tool-holder head that, made from a main hollow body (2) with a coupling taper or attachment (3) for its attachment in the vertical plane to the machine, being attached to it by means of an external fixing element (4) and existing inside of the mentioned main body (2) a transmission mechanism (5) which determines the rotary motion by its axial axis of the support unit (6) in which at least one tool is assembled, is **characterized by** the fact that the axial axis (6a) of the rotary support unit (6) is located angularly (a) with relation to the vertical axis (3a) of the coupling attachment (3) of the machine; and also by the fact that, coupled to the rotary support unit (6), it also has a vibrating device (7) comprising a bearing (71) with bearings (72) which roll on at least one wavy surface, so that in every rotation of the support unit (6), they determine the axial oscillation of the rotary support unit (6).

2. Tool-holder head according to claim 1, **characterized by** the fact that the rotary support unit (6) consists of a spindle.

3. Tool-holder head according to claim 1 or 2, **characterized by** the fact that the axial axis (6a) of the rotary support unit (6) has an angle of between 90 ° to -90 ° with relation to the vertical axis (3a) of the taper (3 ).

4. Tool-holder head according to any of claims 1-3, **characterized by** the fact that the rotary support unit (6) is built-in into a mobile accessory of the main body (2), allowing to vary the angle (a) with the vertical axis (3a).

5. Tool-holder head, according to any of claims 1-4, **characterized by** the fact that the rotary support unit (6) has two axial axis (6a) with respective spindles for both tools, each of them being linked to the vibrating device (7).

6. Tool-holder head according to any of claims 1-5, **characterized by** the fact that it has a duct (8) for the passage of high-pressure coolant through the rotary support unit (6).
